# EUROPEAN PATENT SPECIFICATION

(11) **EP 3 473 402 B1**
(45) Date of publication and mention of the grant of the patent: **14.10.2020**
(21) Application number: 18200746.8
(22) Date of filing: 16.10.2018
(51) Int. Cl.: B29C 45/28, B29C 45/27

(54) **INJECTION MOLDING APPARATUS**
SPRITZGIESSMASCHINE
APPAREIL DE MOULAGE PAR INJECTION

(30) Priority: 17.10.2017 US 201762273444 P
(43) Date of publication of application: 24.04.2019
(73) Proprietor: Mold-Masters (2007) Limited, Georgetown, ON L7G 4X5 (CA)
(72) Inventor: Qian, Jiping, Mississauga, Ontario L5B 4M8 (CA); Jacob, Kenneth, Tunkhannock, PA 18657 (US); Babin, Dennis, Georgetown, Ontario L7G 5W8 (CA)
(74) Representative: Grünecker Patent- und Rechtsanwälte PartG mbB

(56) References cited:
- EP-A1- 0 924 045
- US-A1- 2008 171 100
- US-A1- 2013 309 349

## Description

### FIELD

The invention relates generally to an injection molding apparatus and, in particular, to a melt delivery body having an in-line valve gated nozzle.

### BACKGROUND

Injection molding apparatuses can use in-line valve gated nozzle to mold large articles such as automotive bumpers. An in-line valve gated nozzle is a nozzle that is in a linear configuration with a machine nozzle and a gate of a mold cavity; the arrangement can increase the risks of melt leakage between various components involved, due to heat expansion of the various components involved. Multi-layer injection molding apparatus having a melt delivery body with a melt network and a valve gated nozzle connected to a laterally arranged actuator is known from EP 924 045 A1. From US 2008/171100 A1 and US 2013/309349 A1, two injection molding apparatuses are known having a manifold for delivering melt from an inlet to several outlets connected via a valve pin bushing to a valve gated nozzle, wherein the valve pin for opening and closing of that mold gate are connected to an actuator positioned in the back plate.

### SUMMARY

According to an aspect of this application, there is provided a melt delivery body for an injection molding apparatus including a manifold plate and a machine nozzle to deliver a melt to the melt delivery body, the melt delivery body comprising: a manifold, housed in the manifold plate, including a melt network having an inlet for receiving melt from the machine nozzle and an outlet substantially axially aligned with the inlet; an in-line valve gated nozzle having a nozzle melt channel for delivering melt from the manifold to a mold cavity, the nozzle melt channel substantially axially aligned with the inlet; a valve pin in the melt channel to regulate the rate the melt is dispensed from the in-line valve gated nozzle; an valve pin actuator coupled to the valve pin and positioned substantially axially aligned with the in-line valve gated nozzle and between the manifold and the in-line valve gated nozzle for controlling the movement of the valve pin within the nozzle melt channel; and a biasing member for biasing the in-line valve gated nozzle towards the manifold.

The melt delivery body can further comprise a coupler and an inlet body coupling the in-line valve gated nozzle to the manifold, the coupler defining a coupler melt channel and the inlet body defining an inlet body melt channel, the coupler melt channel and the inlet body melt channel together define a connector melt channel to deliver the melt from the outlet to the nozzle melt channel.

The inlet body can include a passageway housing a connector connected to a pin head of the valve pin, the valve pin actuator can include a piston coupled to a connector to move the connector axially along the passageway.

The melt delivery body can further comprise a retainer attached to a downstream end of the valve pin actuator housing the biasing member.

The melt delivery body can further comprise a locator to align the inlet body melt channel with the outlet.

The inlet body melt channel can include two branches circumventing the pin head connecting the outlet with the nozzle melt channel.

The coupler and the inlet body can be separate components attached to each other.

The coupler and the inlet body can be an integral component.

The coupler can be threadably connected with the in-line valve gated nozzle.

The coupler can be not heated.

The biasing member can be a Belleville spring.

### BRIEF DESCRIPTION

FIG. 1 is a top perspective view of a melt delivery body in accordance with an embodiment of the present application;
FIG. 2 is a top view of the melt delivery body of FIG. 1;
FIG. 3 is a section view of a portion of the melt delivery body of FIG. 1 taken along line A-A of FIG. 2;
FIG. 4 is a section view of a valve pin actuator of FIG. 1 taken along line A-A of FIG. 2;
FIG. 5 is a section view of a valve pin actuator of FIG. 1 taken along line B-B of FIG. 2;
FIG. 6 is a section view of a valve pin actuator of FIG. 1 taken along line C-C of FIG. 2;
FIG. 7 is a section view of a valve pin actuator of FIG. 1 taken along line D-D of FIG. 2; and
FIG. 8 is an example injection molding apparatus.

### DETAILED DESCRIPTION

The following detailed description is exemplary in nature and is not intended to limit the concepts or uses of the concepts. There is no intention to be restricted by any expressed or implied theory in the present disclosure. In the description, melt means a material (e.g., plastic) in a molten state that can be used to mold an article, "downstream" means the direction of the melt flow from a source to a mold cavity, and "upstream" means the opposite direction of downstream.

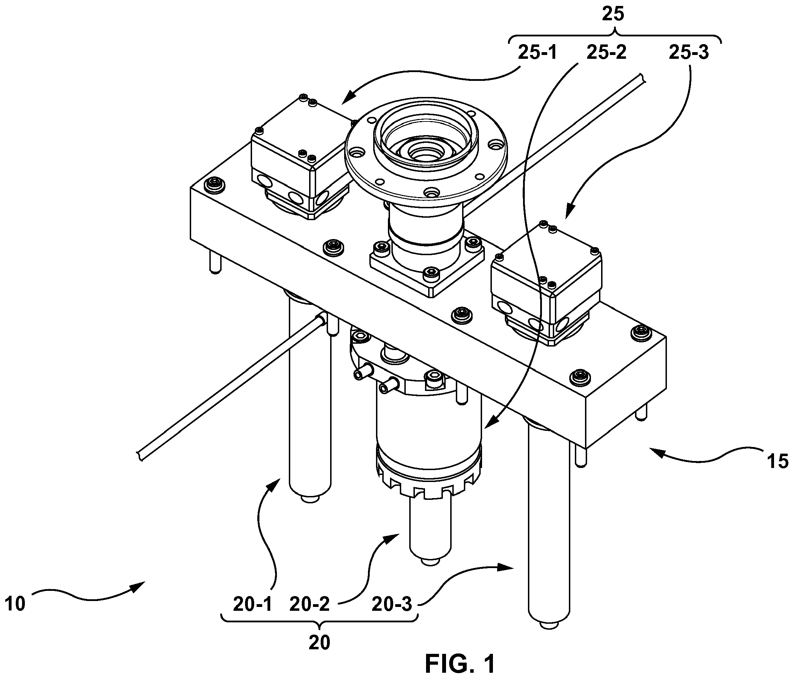

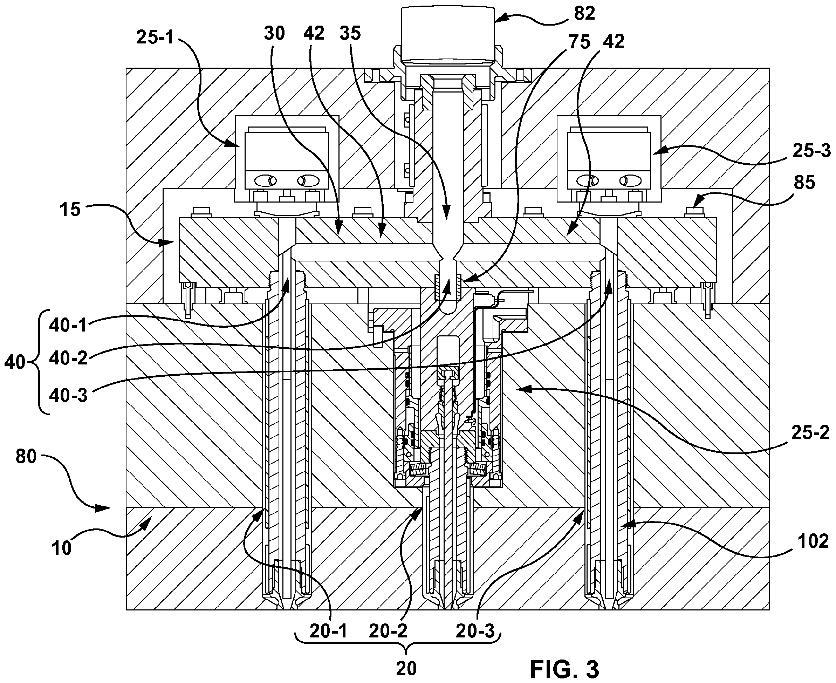

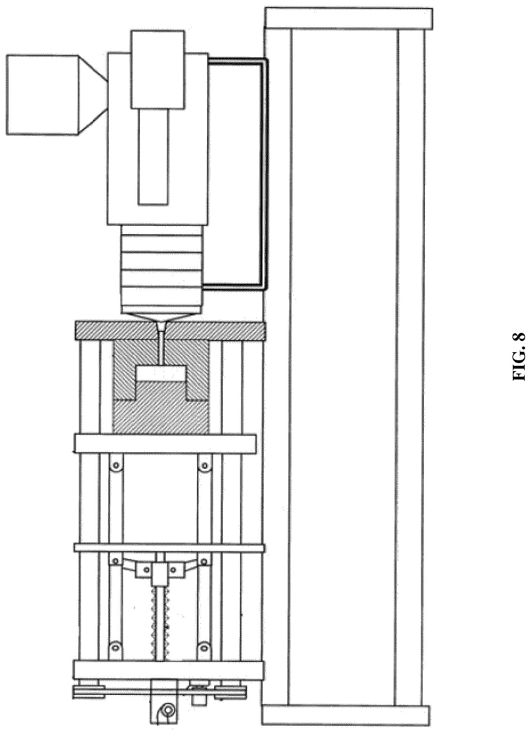

Referring to FIG. 1 (a top perspective view of a melt delivery body in accordance with an embodiment of the present application generally referred to as melt delivery body 10), melt delivery body 10 includes a manifold 15, one or more than one nozzle 20 (individually, as nozzles 20-1, 20-2, and 20-3, and generally as nozzle 20), and one or more than one valve pin actuator 25 (individually, as valve pin actuator 25-1, 25-2, and 25-3, and generally as valve pin actuator 25). In the illustrated embodiment, nozzle 20-2 is an in-line valve gated nozzle (nozzle 20-2 may be referenced below as in-line valve gated nozzle 20-2). Nozzles 20 each include a nozzle melt channel 102 (see FIG. 3) for delivering melt from manifold 15 to a mold cavity (not shown). Melt delivery body 10 is for use in an injection molding apparatus (exemplify by the apparatus in FIG. 8) including a manifold plate 80 and a machine nozzle 82 to deliver a melt (not shown) to melt delivery body 10, see FIG. 3.

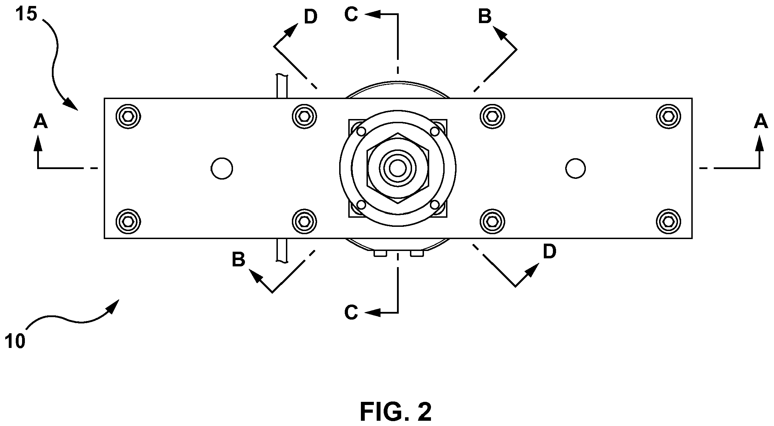

Referring to FIG. 3 (a section view of a portion of melt delivery body 10 of FIG. 1 taken along line A-A of FIG. 2, a top view of the melt delivery body of FIG. 1), manifold 15 defines a melt network 30 to distribute a melt from a source (not shown), via machine nozzle 82, to more than one destination such as nozzles 20. Melt network 30 includes an inlet 35 to receive the melt from the source, more than one outlet 40 (individually, as outlet 40-1,40-2, and 40-3, and generally as outlet 40) to distribute the melt to respective nozzles 20, and more than one melt channel 42 interconnecting inlet 35 with outlets 40. Outlet 40-2 is substantially axially aligned with inlet 35. In the illustrated embodiment, valve pin actuator 25-2 is positioned between inlet 35 and a nozzle melt channel 102 of nozzle 20-2. Normally, actuators are located upstream of the manifold, as exemplified by valve pin actuators 25-1, 25-3. However, because nozzle 20-2 is substantially axially aligned with and downstream from inlet 35 and inlet 35 is for receiving melt from a source, via machine nozzle 82, valve pin actuator 25-2 cannot be located upstream of and substantially axially aligned with inlet 35. Because of the location of valve pin actuator 25-2 (i.e., between manifold 15 and in-line valve gated nozzle 20-2), the shortest path from outlet 40-2 to its respective nozzle 20-2 is through valve pin actuator 25-2.

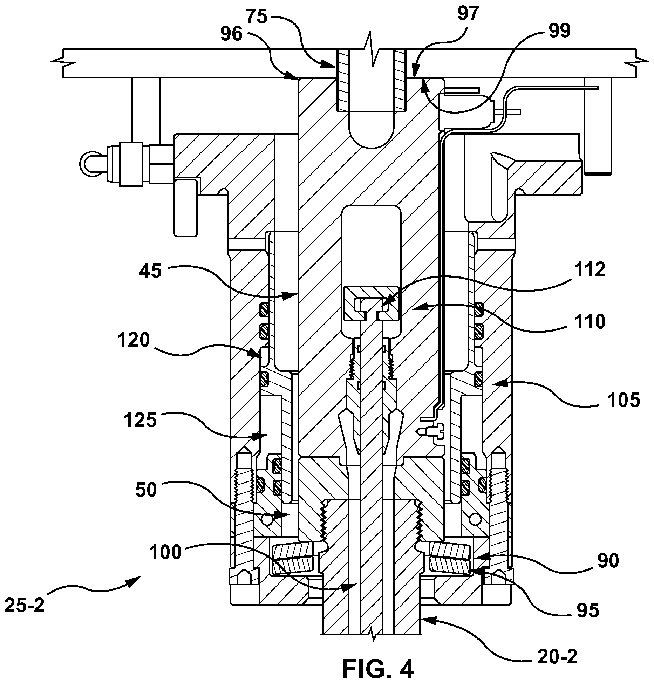

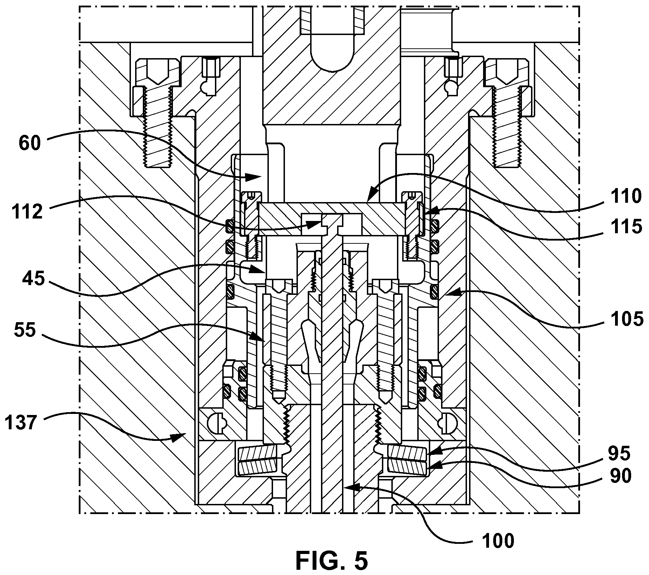

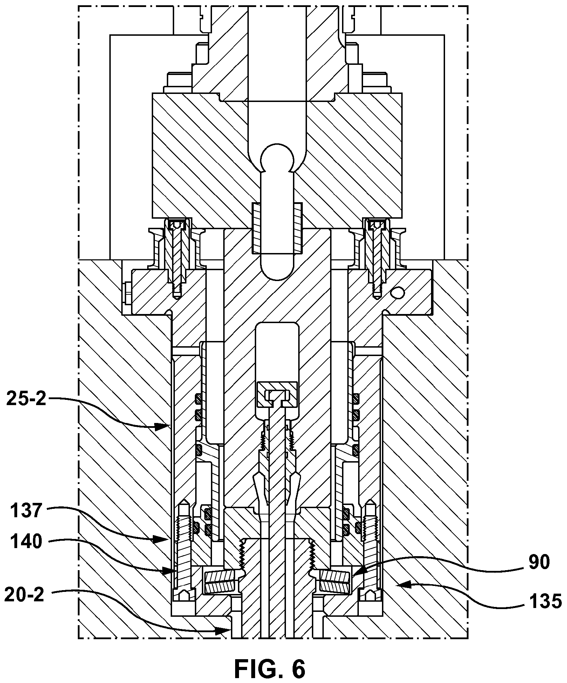

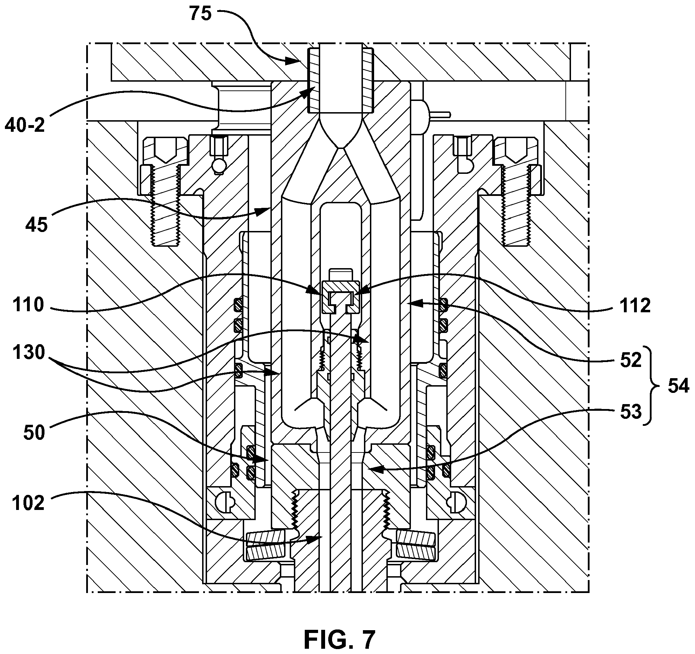

Referring to FIG. 4 (a section view of valve pin actuator 25-2 of FIG. 1 taken along line A-A of FIG. 2), melt delivery body 10 includes an inlet body 45 for conveying the melt from manifold 15 to nozzle 20-2 and a coupler 50 for coupling inlet body 45 to nozzle 20-2. Coupler 50 is threadably attached to nozzle 20-2 and attached to inlet body 45 via screws 55 (see FIG. 5, a section view of valve pin actuator 25-2 of FIG. 1 taken along line B-B of FIG. 2). Inlet body 45 includes an inlet body melt channel 52 and coupler 50 includes a coupler melt channel 53; both inlet body melt channels 52 and coupler melt channel 53 together define a connector melt channel 54 to deliver melt from outlet 40-2 to nozzle 20-2 (see FIG. 7, a section view of valve pin actuator 25-2 of FIG. 1 taken along line D-D of FIG. 2). Inlet body melt channel 52 includes two branches 130 circumventing pin head 112 (see FIG. 7) and connecting outlet 40-2 with nozzle melt channel 102 of in-line valve gated nozzle 20-2. In the illustrated embodiment, coupler 50 is not heated. However, depending on the application, coupler 50 can be heated. In some embodiments, coupler 50 can be integrated with inlet body 45 as a unitary body (not shown). Inlet body 45 includes a diametrically extending passageway 60, extending along the line B-B of FIG. 2. (That is, passageway 60 is a through bore extending from a first location on the exterior surface of inlet body 45 to a second location that is diametrically opposed to the first location on the exterior surface of inlet body 45.) A locator 75 aligns inlet body melt channel 52 with outlet 40-2. Melt delivery body 10 is housed in a manifold plate 80 (of the injection molding apparatus). Bolts 85 secure manifold 15 to manifold plate 80 (see FIG. 3). Melt delivery body 10 includes a biasing member 90 for biasing in-line valve gated nozzle 20-2 towards manifold 15. In the illustrated embodiments, biasing member 90 includes at least one Belleville spring 95. Referring to FIG. 6 (a section view of a valve pin actuator of FIG. 1 taken along line C-C of FIG. 2), melt delivery body 10 includes a retainer 135 and screws 140 to attach retainer 135 to a downstream end 137 of valve pin actuator 25-2. Retainer 135 houses biasing member 90 and a portion of nozzle 20-2. When bolts 85 are torqued to a level suitable to an application, the pressure from the biasing member 90 urges inlet body 45 to abut manifold 15 to prevent melt from escaping between the interface between inlet body 45 and manifold 15. In operation, inlet body 45 is heated to an operating temperature to maintain the melt in inlet body melt channel 52 at a desirable state. Heating inlet body 45 causes inlet body 45 to expand because of heat expansion. Biasing member 90 accommodates for the heat expansion of inlet body 45 and urges inlet body 45 against manifold 15 to reduce the risks of the melt leaking from melt delivery body 10 via a location 96 where an upstream surface 97 of inlet body 45 engages a downstream surface 99 of manifold 15 (see FIG. 4).

Melt delivery body 10 includes a valve pin 100 positioned in each nozzle melt channel 102 to regulate the melt dispensed from nozzles 20. Valve pin actuator 25-2 includes a piston 105 for reciprocating valve pin 100 to regulate the rate of the melt dispensed from nozzle 20-2. Piston 105 is annular to accommodate the components (e.g., inlet body 45 and coupler 50) passing through piston 105. Valve pin 100 is coupled to piston 105 via a connector 110 (see FIG. 4 and FIG. 5). Connector 110 is a dimensioned to extend through passageway 60. That is, passageway 60 houses connector 110 and the ends of connector 110 extends beyond the exterior surface of inlet body 45. Piston 105 can move connector 110 axially along passageway 60 (i.e., along the direction of melt flow). Valve pin 100 includes a pin head 112 for coupling with connector 110. In the illustrated embodiments, connector 110 is attached to piston 105 via screws 115 (see FIG. 5). Valve pin actuator 25-2 includes a first chamber 120 and a second chamber 125 (see FIG. 4). First chamber 120 is for receiving a working fluid (not shown) to move piston 105 downstream and because piston 105 is coupled to valve pin 100 the downstream movement of piston 105 is imparted on to valve pin 100 causing valve pin 100 to move downstream (for example, to close a gate of a cavity (both not shown) in communication with nozzle 20-2). Second chamber 125 is for receiving a working fluid (not shown) to move piston 105 upstream causing valve pin 100 to move upstream (for example, to open a gate of a cavity (both not shown) in communication with nozzle 20-2).

While various embodiments according to the present invention have been described above, it should be understood that they have been presented by way of illustration and example only, and not limitation. It will be apparent to persons skilled in the relevant art that various changes in form and detail can be made therein without departing from the scope of the invention. Thus, the breadth and scope of the present invention should not be limited by the above-described exemplary embodiments, but should be defined only in accordance with the appended claims and their equivalents.

## Claims

1. A melt delivery body (10) for an injection molding apparatus including a manifold plate (80) and a machine nozzle (82) to deliver a melt to the melt delivery body (10),
the melt delivery body (10) comprising:
a manifold (15), housed in the manifold plate (82), the manifold (15) defining a melt network (30), the melt network (30) having an inlet (35) for receiving melt from the machine nozzle (82) and an outlet (40);
an in-line valve gated nozzle (20-2) having a nozzle melt channel (102) for delivering melt from the manifold (15) to a mold cavity, the nozzle melt channel (102) of the in-line nozzle substantially axially aligned with the inlet (35) of the melt network (30);
a valve pin (100) in the melt channel (102) of the in-line valve gated nozzle (20-2) to regulate the rate the melt is dispensed from the in-line valve gated nozzle (20-2); and
a valve pin actuator (25-2) coupled to the valve pin (100), the valve pin actuator (25-2) controlling the movement of the valve pin (100) within the nozzle melt channel (102);
**characterized in that** the melt delivery body (10) further comprising a biasing member (90) for biasing the in-line valve gated nozzle (20-2) towards the manifold (15), wherein the melt network (30) having more than one outlet (40) to distribute melt to respective nozzles (20), and more than one melt channel (42) interconnecting the inlet (35) with the more than one outlets (40), one of the outlets (40-2) being substantially axially aligned with the inlet (35), and wherein the valve pin actuator (25-2) is positioned substantially axially aligned with the in-line valve gated nozzle (20-2) and positioned between the manifold (15) and the in-line valve gated nozzle (20-2).

2. The melt delivery body (10) of claim 1, further comprising a coupler (50) and an inlet body (45) coupling the in-line valve gated nozzle (20-2) to the manifold (15), the coupler (50) defining a coupler melt channel (53) and the inlet body (45) defining an inlet body melt channel (52), the coupler melt channel (53) and the inlet body melt channel (52) together define a connector melt channel (54) to deliver the melt from the outlet (40-2) to the nozzle melt channel (102).

3. The melt delivery body (10) of claim 2, wherein the inlet body (45) includes a passageway (60) housing a connector (110) connected to a pin head (112) of the valve pin (100), the valve pin actuator (25-2) including a piston (105)coupled to the connector (110) to move the connector (110) axially along the passageway (60).

4. The melt delivery body (10) of claim 2, further comprising a retainer (135) attached to a downstream end of the valve pin actuator (25-2), the retainer (135) housing the biasing member (90).

5. The melt delivery body (10) of claim 2, further comprising a locator (75) to align the inlet body melt channel (52) with the outlet (40-2).

6. The melt delivery body (10) of claim 3, wherein the inlet body melt channel (52) includes two branches (130) circumventing the pin head (112), the two branches (130) connecting the outlet (40-2) with the nozzle melt channel (102).

7. The melt delivery body (10) of claim 2, wherein the coupler (50) and the inlet body (45) are separate components attached to each other.

8. The melt delivery body (10) of claim 2, wherein the coupler (50) and the inlet body (45) are an integral component.

9. The melt delivery body (10) of claim 2, wherein the coupler (50) is threadably connected with the in-line valve gated nozzle (20-2).

10. The melt delivery body (10) of claim 2, wherein the coupler (50) is not heated.

11. The melt delivery body (10) of claim 1, wherein the biasing member (90) is a Belleville spring.

## Patentansprüche

1. Ein Schmelzezuführkörper (10) für eine Spritzgießvorrichtung, der eine Verteilerplatte (80) und eine Maschinendüse (82) zum Zuführen einer Schmelze zu dem Schmelzezuführkörper (10) aufweist, der Schmelzezuführkörper (10) umfasst:
einen Verteiler (15), der in der Verteilerplatte (82) aufgenommen ist, wobei der Verteiler (15) ein Schmelzenetzwerk (30) definiert, das Schmelzenetzwerk (30) weist einen Einlass (35) zum Aufnehmen von Schmelze aus der Maschinendüse (82) und einen Auslass (40) auf;
eine ventilgesteuerte Inline-Düse (20-2) mit einem Düsenschmelzekanal (102) zum Zuführen von Schmelze aus dem Verteiler (15) zu einem Formhohlraum, wobei der Düsenschmelzekanal (102) der Inline-Düse im Wesentlichen axial mit dem Einlass (35) des Schmelzenetzwerks (30) ausgerichtet ist;
eine Ventilnadel (100), die in dem Schmelzekanal (102) der ventilgesteuerten Inline-Düse (20-2) angeordnet ist, um die Abgabemenge der Schmelze aus der ventilgesteuerten Inline-Düse (20-2) zu regulieren; und
einen Ventilnadelantrieb (25-2), der mit der Ventilnadel (100) gekoppelt ist, der Ventilnadelantrieb (25-2) steuert die Bewegung der Ventilnadel innerhalb des Düsenschmelzekanals (102);
**dadurch gekennzeichnet, dass** der Schmelzezuführkörper (10) weiter ein Vorspannelement (90) zum Vorspannen der ventilgesteuerten Inline-Düse (20-2) in Richtung auf den Verteiler (15) umfasst, wobei das Schmelzenetzwerk (30) mehr als einen Auslass (40), zum Verteilen von Schmelze auf entsprechende Düsen (20), und mehr als einen Schmelzekanal (42) aufweist, die den Einlass (35) mit den mehr als einen Auslässen (40) verbindet, wobei einer der Auslässe (40-2) im Wesentlichen axial mit dem Einlass (35) ausgerichtet ist, und wobei der Ventilnadelantrieb (25-2) im Wesentlichen axial ausgerichtet mit der ventilgesteuerten Inline-Düse (20-2) und zwischen dem Verteiler (15) und der ventilgesteuerten Inline-Düse (20-2) angeordnet ist.

2. Der Schmelzezuführkörper (10) nach Anspruch 1, weiter umfassend ein Verbindungsstück (50) und einen Einlasskörper (45), der die ventilgesteuerte Inline-Düse (20-2) mit dem Verteiler (15) verbindet, das Verbindungsstück (50) definiert einen Verbindungsstück-Schmelzekanal (53) und der Einlasskörper (45) definiert einen Einlasskörper-Schmelzekanal (52), wobei der Verbindungsstück-Schmelzekanal (53) und der Einlasskörper-Schmelzekanal (52) zusammen einen Verbinder-Schmelzekanal (54) definieren, um die Schmelze von dem Auslass (40-2) zu dem Düsenschmelzekanal (102) zu fördern.

3. Der Schmelzezuführkörper (10) nach Anspruch 2, wobei der Einlasskörper (45) einen Durchgang (60) aufweist, in dem ein Verbinder (110) aufgenommen ist, der mit einem Nadelkopf (112) der Ventilnadel (100) verbunden ist, wobei der Ventilnadelantrieb (25-2) einen Kolben (105) aufweist, der mit dem Verbinder (110) verbunden ist, um den Verbinder (110) axial entlang des Durchgangs (60) zu bewegen.

4. Der Schmelzezuführkörper (10) nach Anspruch 2, weiter umfassend einen Halter (135), der an einem stromabwärtigen Ende des Ventilnadelantriebs (25-2) angebracht ist, wobei der Halter (135) das Vorspannelement (90) aufnimmt.

5. Der Schmelzezuführkörper (10) nach Anspruch 2, weiter umfassend einen Zentrierring (75), um den Einlasskörper-Schmelzekanal (52) mit dem Auslass (40-2) auszurichten.

6. Der Schmelzezuführkörper (10) nach Anspruch 3, wobei der Einlasskörper-Schmelzekanal (52) zwei Abzweigungen (130) aufweist, die den Nadelkopf (112) umgeben, wobei die zwei Abzweigungen (130) den Auslass (40-2) mit dem Düsenschmelzekanal (102) verbinden.

7. Der Schmelzezuführkörper (10) nach Anspruch 2, wobei das Verbindungsstück (50) und der Einlasskörper (45) separate Bauteile sind, die aneinander befestigt sind.

8. Der Schmelzezuführkörper (10) nach Anspruch 2, wobei das Verbindungsstück (50) und der Einlasskörper (45) ein integrales Bauteil sind.

9. Der Schmelzezuführkörper (10) nach Anspruch 2, wobei das Verbindungsstück (50) mit der ventilgesteuerten Inline-Düse (20-2) verschraubt ist.

10. Der Schmelzezuführkörper (10) nach Anspruch 2, wobei das Verbindungsstück (50) unbeheizt ist.

11. Der Schmelzezuführkörper (10) nach Anspruch 1, wobei das Vorspannelement (90) eine Tellerfeder ist.

## Revendications

1. Corps de distribution de matière fondue (10) pour un appareil de moulage par injection comprenant une plaque de collecteur (80) et une buse de machine (82) pour distribuer une matière fondue au corps de distribution de matière fondue (10),
le corps de distribution de matière fondue (10) comprenant :
un collecteur (15), logé dans la plaque de collecteur (82), le collecteur (15) définissant un réseau de fusion (30), le réseau de fusion (30) ayant une entrée (35) pour recevoir de la matière fondue depuis la buse de machine (82) et une sortie (40) ;
une buse à obturation par vanne en ligne (20-2) ayant un canal de fusion de buse (102) pour distribuer de la matière fondue depuis le collecteur (15) à une cavité de moule, le canal de fusion de buse (102) de la buse en ligne étant aligné sensiblement axialement avec l'entrée (35) du réseau de fusion (30) ;
une tige de vanne (100) dans le canal de fusion (102) de la buse à obturation par vanne en ligne (20-2) pour réguler la vitesse de distribution de la matière fondue à partir de la buse à obturation par vanne en ligne (20-2) ; et
un actionneur de tige de vanne (25-2) couplé à la tige de vanne (100), l'actionneur de tige de vanne (25-2) commandant le mouvement de la tige de vanne (100) à l'intérieur du canal de fusion de buse (102) ;
**caractérisé en ce que** le corps de distribution de matière fondue (10) comprend en outre un élément de sollicitation (90) pour solliciter la buse à obturation par vanne en ligne (20-2) vers le collecteur (15), dans lequel le réseau de fusion (30) ayant plus d'une sortie (40) pour distribuer de la matière fondue à des buses respectives (20), et plus d'un canal de fusion (42) interconnectant l'entrée (35) avec les plus d'une sortie (40), l'une des sorties (40-2) étant sensiblement alignée axialement avec l'entrée (35), et dans lequel l'actionneur de tige de vanne (25-2) est positionné en étant sensiblement axialement aligné avec la buse à obturation par vanne en ligne (20-2) et positionné entre le collecteur (15) et l'entrée de buse à obturation par vanne en ligne (20-2).

2. Corps de distribution de matière fondue (10) selon la revendication 1, comprenant en outre un coupleur (50) et un corps d'entrée (45) couplant la buse à obturation par vanne en ligne (20-2) au collecteur (15), le coupleur (50) définissant un canal de fusion de coupleur (53) et le corps d'entrée (45) définissant un canal de fusion de corps d'entrée (52), le canal de fusion de coupleur (53) et le canal de fusion de corps d'entrée (52) définissent ensemble un canal de fusion de connecteur (54) pour délivrer la matière fondue depuis la sortie (40-2) au canal de fusion de buse (102).

3. Corps de distribution de matière fondue (10) selon la revendication 2, dans lequel le corps d'entrée (45) comprend un passage (60) logeant un connecteur (110) relié à une tête de tige (112) de la tige de vanne (100), l'actionneur de tige de vanne (25-2) comprenant un piston (105) couplé au connecteur (110) pour déplacer le connecteur (110) axialement le long du passage (60).

4. Corps de distribution de matière fondue (10) selon la revendication 2, comprenant en outre un élément de retenue (135) fixé à une extrémité aval de l'actionneur de tige de vanne (25-2), l'élément de retenue (135) logeant l'élément de sollicitation (90).

5. Corps de distribution de matière fondue (10) selon la revendication 2, comprenant en outre un dispositif de positionnement (75) pour aligner le canal de fusion de corps d'entrée (52) avec la sortie (40-2).

6. Corps de distribution de matière fondue (10) selon la revendication 3, dans lequel le canal de fusion de corps d'entrée (52) comprend deux branches (130) contournant la tête de tige (112), les deux branches (130) reliant la sortie (40-2) avec le canal de fusion de buse (102).

7. Corps de distribution de matière fondue (10) selon la revendication 2, dans lequel le coupleur (50) et le corps d'entrée (45) sont des composants séparés attachés l'un à l'autre.

8. Corps de distribution de matière fondue (10) selon la revendication 2, dans lequel le coupleur (50) et le corps d'entrée (45) sont un composant d'un seul tenant.

9. Corps de distribution de matière fondue (10) selon la revendication 2, dans lequel le coupleur (50) est relié par filetage à la buse à obturation par vanne en ligne (20-2).

10. Corps de distribution de matière fondue (10) selon la revendication 2, dans lequel le coupleur (50) n'est pas chauffé.

11. Corps de distribution de matière fondue (10) selon la revendication 1, dans lequel l'élément de sollicitation (90) est un ressort Belleville.
